Europäisches Patentamt

European Patent Office

Office européen des brevets

(19)

(11) Veröffentlichungsnummer: **0 038 081**
**B1**

(12) **EUROPÄISCHE PATENTSCHRIFT**

(45) Veröffentlichungstag der Patentschrift:
04.12.85

(21) Anmeldenummer: 81102894.3

(22) Anmeldetag: 15.04.81

(51) Int. Cl.⁴: **F 16 B 5/02**

(54) **Vorrichtung zur Schraubbefestigung von Flachteilen.**

(30) Priorität: 16.04.80 CH 2928/80

(43) Veröffentlichungstag der Anmeldung:
21.10.81 Patentblatt 81/42

(45) Bekanntmachung des Hinweises auf die Patenterteilung:
04.12.85 Patentblatt 85/49

(84) Benannte Vertragsstaaten:
AT BE CH DE FR GB IT LI LU NL SE

(56) Entgegenhaltungen:
BE - A - 702 765
DE - A - 1 575 175
DE - B - 1 181 007
DE - U - 7 339 195
FR - A - 1 284 688
US - A - 2 804 796
US - A - 3 074 519

(73) Patentinhaber: Amherd AG, Hallwylstrasse 78,
CH-8036 Zürich (CH)

(72) Erfinder: Hug, Alfred, Zürichstrasse 242, CH-9122 Binz
(CH)

(74) Vertreter: Rottmann, Maximilian R., Hug Interlizenz AG
Alte Zürcherstrasse 49, CH-8903 Birmensdorf/ZH (CH)

**Beschreibung**

Die vorliegende Erfindung bezieht sich auf eine Vorrichtung zur Schraubbefestigung von Flachteilen nach dem Oberbegriff des Patentanspruchs 1.

Eine Vorrichtung dieser Art ist aus der DE-OS 1 575 175 bekannt. Bei dieser Vorrichtung ist ein Hülsenteil mit die Durchbrechungen der Flachteile durchgreifenden Anschlägen vorgesehen, mit denen das die Flachteile hintergreifende Element der Bolzen-Mutteranordnung in der Arretierungsstellung unmittelbar in Berührung tritt und sein Widerlager gegen die Drehbewegung findet. Infolgedessen unterliegen diese Anschläge, die beispielsweise als vergleichsweise lange und dünne Ansätze des Hülsenteils ausgebildet sind, beträchtlicher Biegebeanspruchung, insbesondere bei festsitzenden Schraubverbindungen. Außerdem bedingt dieser Vorschlag einen mehrteiligen Aufbau der Bolzen-Mutteranordnung, d. h. mit einem zusätzlichen Hülsenelement neben dem Bolzenelement und dem Mutterelement.

Eine andere Vorrichtung dieser Art ist aus der DE-AS 1 181 007 bekannt geworden. Bei dieser Vorrichtung ist ein mit einer Gewindebohrung versehenes Mutterelement vorgesehen, welches durch eine ein vorderes Flachteil durchgreifende Schraube gegen ein hinteres, mit einer Langlochöffnung versehenes Flachteil verspannt werden kann. Ein Ansatz am Mutterelement weist Anschlagkanten auf, die in die Langlochöffnung einzugreifen bestimmt sind und so ein Verdrehen des Mutterelementes beim letztendlichen Anziehen der Schraube verhindern. Auch diese Vorrichtung ermöglicht kein zuverlässiges Einsetzen der Schrauben-Mutterelement-Anordnung von einer Seite her in die beiden zu verbindenden Flachteile, da zumindest in einer Anfangsphase des Festziehens der Schraube das Mutterelement festgehalten werden muß, um ein Mitdrehen zu vermeiden.

Aufgabe der Erfindung ist daher die Schaffung einer Schraubverbindung der eingangs erwähnten Art, die sich zum einseitigen Anbringen bzw. Einsetzen der Bolzen-Mutteranordnung zur Verbindung von Blechteilen und dergleichen eignet und die sich durch einfachen Aufbau und geringe Beanspruchung der Vorrichtungteile im Gebrauch, insbesondere auch bei schwergängigem oder stark angezogenem Gewinde und entsprechende Haltbarkeit auszeichnet. Die erfindungsgemäße Lösung dieser Aufgabe ergibt sich bei einer Vorrichtung der eingangs genannten Art durch die kennzeichnenden Merkmale des Patentanspruchs 1.

Weiterbildungen dieser Lösung sind durch die Merkmale der abhängigen Ansprüche 2 bis 12 gekennzeichnet. Es geht daraus hervor, daß einzelne Ausführungsformen auch für kreisförmige Durchbrechungen geeignet sind und im allgemeinen von einem kraft- oder formschlüssig wirkenden, an den Durchbrechungswandungen angreifenden Dreharretierungsglied Gebrauch machen.

Ein Anschlagelement oder mehrere derselben können mit dem die Flachteile hintergreifenden Element der Bolzen-Mutteranordnung grundsätzlich in unterschiedlicher Weise drehfest verbunden werden, beispielsweise durch elastische, leicht nachgiebige Ausbildung der Anschläge oder ihrer Verbindung mit dem hintergreifenden Element oder mit Hilfe einer reibungsschlüssigen Verbindung zwischen dem Anschlag und dem hintergreifenden Element, wobei ersteres als getrenntes Element auszubilden wäre. Vorteilhaft ist jedoch gemäß einer Weiterbildung der Erfindung eine einstückige Anformung des Anschlagelementes an dem hintergreifenden Element, und zwar in Form von Anschlägen, etwa für einen Schwenkbereich von 90° des hintergreifenden Elementes zwischen seiner Durchtrittsstellung und der Arretierungsstellung. Mit der letztgenannten Schwenkwinkelausbildung ergibt sich eine optimale Ausnutzung der Breitenabmessungen der Flachteil-Durchbrechungen, z. B. der üblichen Langlöcher mit parallelen Seitenkanten.

Die Erfindung wird anhand der in den Zeichnungen dargestellten Ausführungsbeispiele erläutert. Hierin zeigt

Fig. 1 einen Axialschnitt einer ersten erfindungsgemäßen Vorrichtung in Arretier- bzw. Anzugsstellung innerhalb fluchtender Durchbrechungen zweier Flachteile,

Fig. 2 einen Querschnitt gemäß Ebene II-II in Fig. 1,

Fig. 3 einen Axial-Halbschnitt einer zweiten Ausführung einer erfindungsgemäßen Vorrichtung, und zwar in Einführstellung des die Flachteile hintergreifenden Elementes,

Fig. 4 einen Querschnitt gemäß Ebene IV-IV in Fig. 3, jedoch in Arretierstellung des die (hier nicht dargestellten) Flachteile hintergreifenden Elementes der Bolzen-Mutteranordnung,

Fig. 5 einen Axialschnitt einer dritten Ausführung einer erfindungsgemäßen Vorrichtung für kreisförmige Durchbrechungen, und zwar in Einführstellung (Arretierstellung strichliert) und

Fig. 6 einen Querschnitt gemäß Ebene IX-IX in Fig. 5.

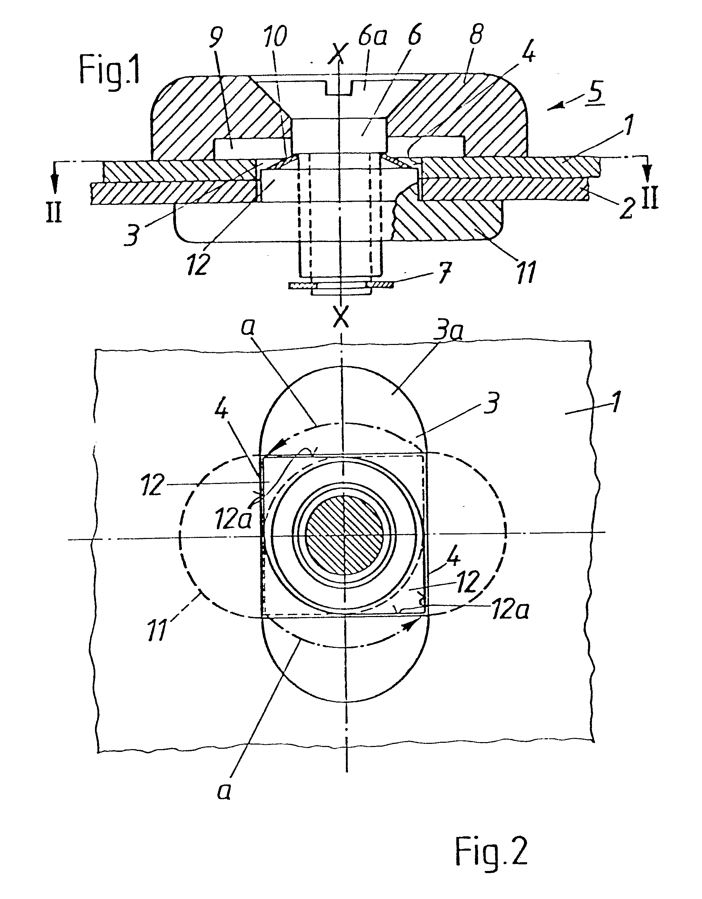

Bei der Ausführung nach Fig. 1 und 2 sind in den zu verbindenden Flachteilen 1 und 2 fluchtende Durchbrechungen 3 in Form von Langlöchern vorgesehen. In diese Durchbrechungen eingesetzt ist eine Bolzen-Mutteranordnung 5, die ein Bolzenelement 6 mit Senkkopf als Betätigungsteil 6a und Sprengring-Axialsicherung 7 am innenliegenden Bolzenende aufweist. Das Bolzenelement 6 sitzt außen, d. h. an der Betätigungsseite, in einem Kopfelement 8, welches nach Art einer starken Unterlegscheibe ausgebildet ist und an seiner am Flachteil 1 liegenden Seite eine Ausnehmung 9 aufweist. Es versteht sich, daß die insoweit zweiteilige Ausführung nicht zwingend erforderlich ist, um eine Verdrehung des Bolzenteils zum Anziehen der Schraubverbindung zu ermöglichen. Grundsätzlich kommt vielmehr auch eine einstückige Ausführung von Kopfelement 8 und Bolzenelement 6 in Betracht, obwohl man im allgemeinen eine zweiteilige Ausführung der dargestellten Art zur Erleichterung der Drehbewegung vorziehen wird.

An der Innenseite stützt sich das Bolzenelement 6 über eine Tellerfeder 10 an der Stirnfläche eines Mutterelementes 11 ab, welch letzteres auf den Gewindeabschnitt des Holzelementes aufgeschraubt ist und in seiner Umrißform der Langlochform der Durchbrechungen 3 angepaßt ist (vgl. Fig. 2). Infolgedessen kann dieses Mutterelement in eine bezüglich Fig. 2 um 90° verdrehten Stellung durch die Langlöcher geführt und anschließend durch Verdrehen des Bolzenelementes 6 mit einem Schwenkwinkel a entsprechend den strichpunktierten Pfeilen in Fig. 2 in die dort strichliert angedeutete Arretierungsstellung überführt werden. In dieser Stellung kommen die aus Fig. 2 ersichtlichen Dreharretierungsglieder 12 jeweils mit einer von beiden Seitenkanten 12a zur Anlage an einem Wandungsabschnitt 4 der Durchbrechungen 3. Die axiale Höhe der als Stirnansatz ausgebildeten Dreharretierungsglieder 12 kann so gewählt werden, daß die Anlage an den Wandungsflächen beider Flachteile 1 und 2 erfolgt, gegebenenfalls aber auch nur innerhalb des Flachteils 2, sofern eine vergleichsweise große Blechdicke vorliegt. Die angedeutete Umrißform der Glieder 12, nämlich mit zwei unter 90° gegeneinander geneigten Seitenkantenflächen, die symmetrisch zur Bolzenachse X-X angeordnet sind, ermöglicht eine maximale Ausnutzung des durch die Langlochbreite gegebenen Spielraumes für die Schwenkbewegung.

Bei der Schwenkbewegung des Bolzenelementes 6 wird das Mutterelement 11 durch die bereits erwähnte Tellerfeder 10, die als reibungsschlüssige Kupplung wirkt, mitgenommen, bis die Dreharretierungsglieder 12 an den Langlochwandungen anliegen. Beim Weiterdrehen des Bolzenelementes verharrt das Mutterelement 11 in seiner Arretierungsstellung gemäß Fig. 2, und die Schraubverbindung wird angezogen. Dabei übergreift das Kopfelement 8 die Langlochdurchbrechung mit ihren radial ausladenden Abschnitten 3a vollständig.

Die dargestellte Schraubvorrichtung ist für unterschiedliche Gesamtblechdicken der Flachteile 1 und 2 anwendbar, bis zu einer Maximaldikke, entsprechend der Länge des Bolzenelementes 6, wenn nämlich das Mutterelement 1 in maximal herausgedrehtem Zustand die Blechdicke gerade noch hintergreifen kann. Andererseits ist die Vorrichtung auch für sehr viel geringere Blechdicken als die in Fig. 1 angedeuteten verwendbar, wobei die innere Stirnfläche der Glieder 12 über die betätigungsseitige Blechoberfläche hinaustreten kann. Hierfür ist die bereits erwähnte Stirnausnehmung 9 des Kopfelementes 8 vorgesehen, welche den übertretenden Teil der Axialhöhe der Glieder 12 aufnimmt.

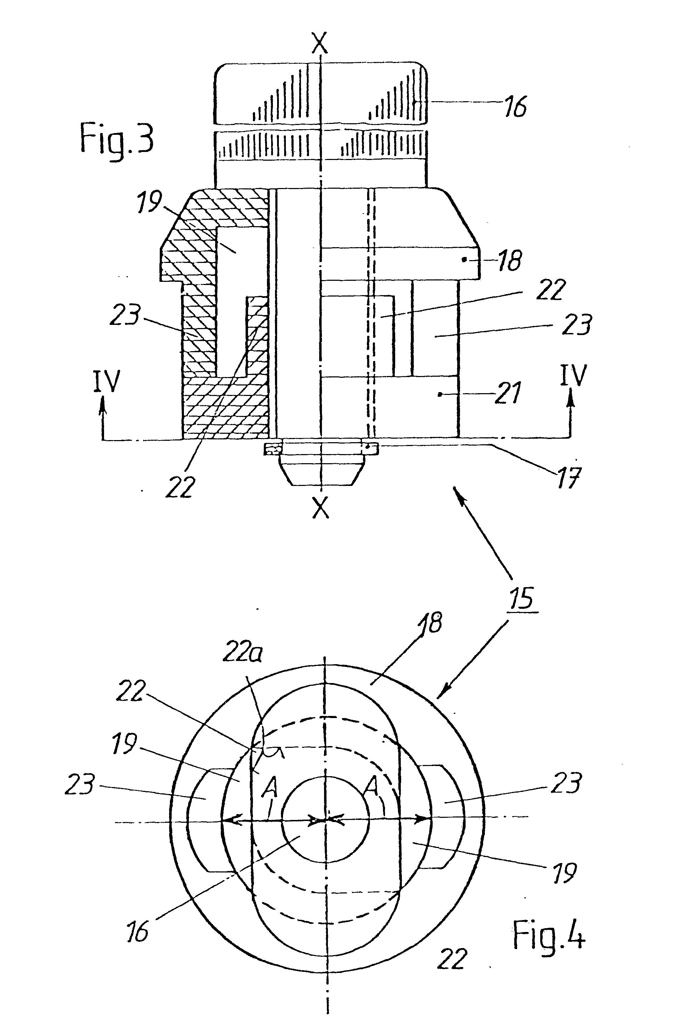

Die Bolzen-Mutteranordnung 15 nach Fig. 3 umfaßt ein Bolzenelement 16 mit Rändelkopf und End-Sprengringsicherung 17 sowie ein Kopfelement 18 und ein Mutterelement 21.

Entsprechend der in diesem Beispiel größeren Axialhöhe der Dreharretierungsglieder 22, die den Gliedern 12 nach Fig. 1 entsprechen, ist an der Innenseite des Kopfelementes 18 eine Ausnehmung 19 von größerer Tiefe vorgesehen. Insgesamt eignet sich diese Ausführung also zur Überdeckung eines noch größeren Variationsbereiches der Gesamtblechdicke.

Die Umrißform des Mutterteils 21 mit zwei diametral angeordneten Dreharretierungsgliedern 22, deren Seitenkanten 22a mit Wandungsabschnitten von hier nicht dargestellten Flachteil-Durchbrechungen zur Anlage kommen, entspricht im wesentlichen der Ausführung nach Fig. 2. Abweichend sind jedoch bei der Ausführung nach Fig. 3 und 4 am Kopfteil Ansätze 23 angeformt, die sich in Axialrichtung parallel zur Bolzenachse X-X erstrecken, in die radial ausladende Abschnitte (s. die Abschnitte 3a in Fig. 2) eingreifen und bei entsprechender Axialbemessung zur gegenseitigen Zentrierung der Durchbrechungen beider Flachteile dienen können.

Außerdem bewirken diese Ansätze eine Dreharretierung des Kopfteils 18 in bezug auf die zu verbindenden Flachteile. Es versteht sich, daß diese Zentrier- und Arretierfunktion der Ansätze 23 grundsätzlich keine Voraussetzung für die Ausnutzung einer unmittelbaren Abstützung der Anschlagelemente an den Durchbrechungswandungen darstellt.

Eine Dreharretierung des Kopfteils kann, sofern erwünscht, grundsätzlich auch durch äußeres Festhalten dieses Teiles erreicht werden. Für eine unbehinderte Schwenkung des Mutterteils 21 mit seinen Dreharretierungsgliedern 22 aus der Einführstellung in die Arretierungsstellung ist der Radialabstand A zwischen den Innenseiten der Ansätze 23 und der Bolzenachse X-X ausreichend groß gewählt, um einen freien Durchtritt der maximalen Ausladung der Anschlagelemente 22 zu ermöglichen. Diese Schwenkbewegung findet also ihre Begrenzung nur durch die Anlage an den Durchbrechungswandungen.

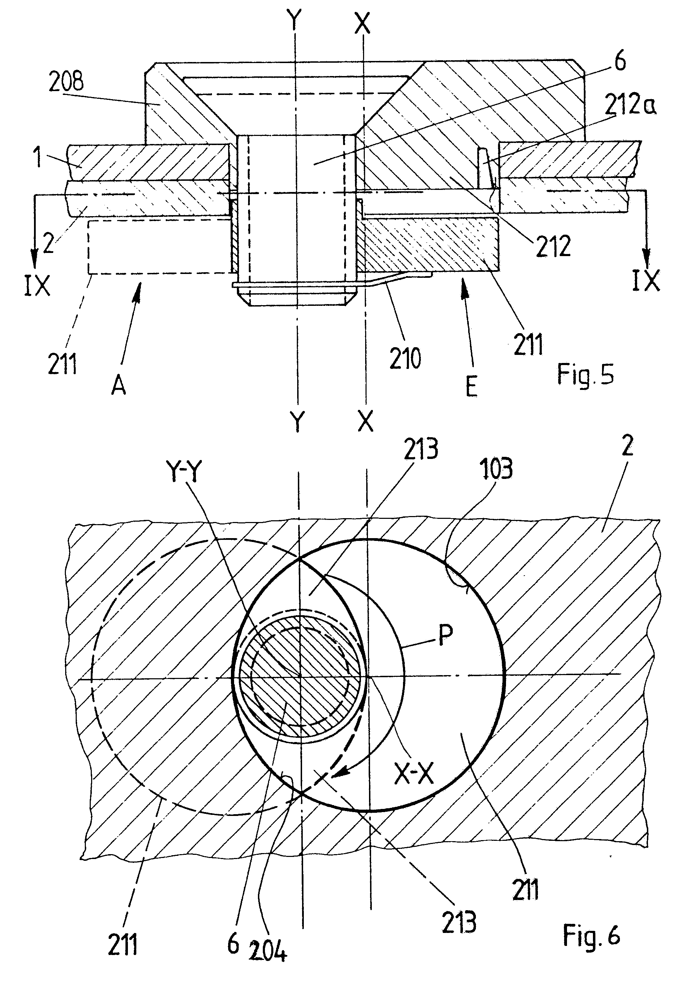

Bei der Ausführung nach den Fig. 5 und 6 sind die Flachteile 1 und 2 mit kreisförmigen Durchbrechungen 103 versehen, in die eine Bolzen-Mutteranordnung mit Gewindebolzen 6 und Kopf 208 sowie mit einem als Mutter ausgebildeten, die Flachteile 1 und 2 hintergreifenden Element 11 eingeführt wird. Hierzu ist der Bolzen 6 bezüglich der Durchbrechungs-Zentralachse X-X exzentrisch in das Kopfelement 208 mit einem kreisförmigen Zentrieransatz 212 drehbar eingesetzt. Der Zentrieransatz 212 greift in der aus Fig. 5 ersichtlichen Weise in die Durchbrechungen 103 ein und ist mit Hilfe einer ringförmigen Hinterschneidung 212a radial federnd ausgebildet, so daß sich eine kraftschlüssige Dreharretierung des Kopfelementes 208 ergibt. Der in Richtung der Durchbrechungs-Zentrierung X-X bzw. der Gewindeachse Y-Y gesehene Umriß des Zentrieransatzes 212 sowie derjenige des die Flachteile hintergreifenden, im Beispielsfall scheibenförmigen Elementes 211 ist dem kreisförmigen Durchbrechungsumfang mit Untermaß angepaßt, so daß bei fluchtender Ausrichtung von Zentrieransatz 212 und Element 211 gemäß Fig. 5 in der Einführstellung E das Einsetzen der Bolzen-Mutteranordnung ohne weiteres möglich ist. Die Dreharretierung des Kopfelementes 208 wird hierbei durch den erwähnten Kraftschluß hergestellt, ist jedoch hier keine unbedingt notwendige Voraussetzung, weil das Kopfelement von außen zugänglich ist und somit auch von Hand festgehalten werden kann.

Anschließend wird das Element 211 durch Verdrehen des Bolzens 6 um 180° in die Arretierungsstellung A gebracht (siehe Fig. 5). Für diese Schwenkung kommt es auf eine Mitnahme zwischen dem Bolzen 6 und dem Element 211 an. Dazu ist ein gleichzeitig als Axialbegrenzungsring ausgebildetes Blattfederelement 210 am hinteren Ende des Bolzens 6 vorgesehen. Dieses Federelement ist durch nicht dargestellte, einfache Rastung oder auch durch Reibungsschluß und entsprechende Vorspannung drehfest mit dem Bolzen 6 verbunden und greift mit seinem äußeren Ende mit Federspannung in Axialrichtung an der Stirnfläche des Elementes 211 an.

Die Schwenkbewegung zwischen der Einführstellung E und der Arretierungsstellung A ist in der Beispielsausführung durch ein Dreharretierungsglied 213 begrenzt, welches nockenartig an die innere Stirnfläche des Elementes 211 angeformt ist und in der aus Fig. 6 ersichtlichen Weise bei der Schwenkung gemäß Pfeil P an die Stelle 204 der Wandung der Durchbrechung 103 des hinteren Flachteils 2 anschlägt. Damit ist ein Drehwiderlager für das Anziehen der Verschraubung geschaffen. Hierbei hintergreift, wie aus Fig. 6 ersichtlich ist, der größte Teil des Elementes 211 das hintere Flachteil 2. Demgemäß ergibt sich durch Anziehen der Verschraubung eine stabile Verbindung.

## Patentansprüche

1. Vorrichtung zur Schraubbefestigung von Flachteilen (1, 2) aneinander, mit einer von einer Betätigungsseite her in Durchbrechungen (3, 103) der Flachteile einsetzbaren, ein Bolzenelement (6, 16) und ein Mutterelement (11, 21, 211) umfassenden Bolzen-Mutteranordnung (5, 15), wobei das Mutterelement mindestens ein nach Verdrehen aus einer Durchtrittsstellung in eine Arretierungsstellung die Flachteile hintergreifendes Teil und ein drehfest damit verbundenes, an mindestens einer Wandung (4, 204) der Durchbrechungen anliegendes Dreharretierungsglied (12, 22, 213) umfaßt, dadurch gekennzeichnet, daß an der zum Dreharretierungsglied (12, 22, 213) entgegengesetzten Seite der Bolzen-Mutteranordnung (5, 15) ein sich auf der Oberfläche des benachbarten Flachteiles (1) abstützendes, die Durchbrechungen (3, 103) gesamthaft überdeckendes, auf das Bolzenelement (6, 16) aufgestecktes oder mit diesem einstückig ausgebildetes Kopfelement (8, 18, 208) vorgesehen ist, und daß ein durch Reibungsschluß oder weichelastischen Formschluß wirkendes Dreh-Mitnehmerglied (10, 210) vorgesehen ist, welches bei einer Verdrehung des Bolzenelementes (6, 16) das die Flachteile (1, 2) hintergreifende Mutterelement (11, 21, 211) mitzudrehen befähigt ist.

2. Vorrichtung nach Anspruch 1, dadurch gekennzeichnet, daß das Dreharretierungsglied (12, 22) einstückig an dem die Flachteile (1, 2) hintergreifenden Teil der Bolzen-Mutteranordnung (5, 15) angeformt ist und wenigstens ein nockenförmiges, im wesentlichen durch zwei zueinander unter einem Winkel von etwa 90° und parallel zur Bolzenachse (X-X) angeordnete Flächen (12a, 22a) begrenztes Anschlagelement (12, 22) besitzt.

3. Vorrichtung nach Anspruch 1 oder 2, dadurch gekennzeichnet, daß das Kopfelement (8, 18) mit einer an seiner flachteilseitigen Innenfläche angeordneten Ausnehmung (9, 19) zur Aufnahme eines Endabschnittes des Dreharretierungsgliedes (12, 22) versehen ist.

4. Vorrichtung nach Anspruch 1, 2 oder 3, dadurch gekennzeichnet, daß das Dreh-Mitnehmerglied (10) zwischen einem Drehbetätigungsglied (6a) der Bolzen-Mutteranordnung (5) und dem die Flachteile (1, 2) hintergreifenden Element (11) angeordnet ist.

5. Vorrichtung nach Anspruch 4, dadurch gekennzeichnet, daß als Dreh-Mitnehmerglied eine in Axialrichtung reibungsschlüssig mit einem Element (12) der Bolzen-Mutteranordnung (5) in Wirkverbindung stehende Druckfeder, insbesondere eine Tellerfeder (10) vorgesehen ist.

6. Vorrichtung nach einem der vorhergehenden Ansprüche, dadurch gekennzeichnet, daß an einem auf der Betätigungsseite der Flachteile angeordneten Kopfelement (18) mindestens ein in einen bezüglich der Bolzenachse (X-X) radial ausladenden Abschnitt (3a) mindestens einer Durchbrechung (3) eingreifender Ansatz (23) vorgesehen ist.

7. Vorrichtung nach Anspruch 6, dadurch gekennzeichnet, daß zwischen der Innenseite des Ansatzes (23) und der Bolzenachse (X-X) ein für die Bewegung des Dreharretierungsgliedes (12, 22) zwischen der Einführstellung und der Arretierungsstellung (22) ausreichender Abstand (A) vorgesehen ist.

8. Vorrichtung nach Anspruch 6 oder 7, dadurch gekennzeichnet, daß für eine wenigstens im hinteren (2) der Flachteile vorgesehene, nicht kreisförmige Durchbrechung (3) mindestens ein in den radial ausladenden Durchbrechungsabschnitt (3a) eingreifender Zentrier- und/oder Dreharretierungsansatz (23) für das Kopfelement (18) vorgesehen ist.

9. Vorrichtung nach einem der Ansprüche 1 bis 8, dadurch gekennzeichnet, daß bei wenigstens annähernd kreisförmigen Durchbrechungen der in Axialrichtung (X-X) der Durchbrechungen (103) gesehene Umriß des Zentrieransatzes (212) und des die Flachteile hintergreifenden Elementes (211) dem Durchbrechungsumfang mit Untermaß angepaßt ist und daß das hintergreifende Element (211) bezüglich des Zentrieransatzes (212) um eine bezüglich der Durchbrechungs-Zentralachse (X-X) exzentrische Achse (Y-Y) aus einer mit den Durchbrechungen (103) fluchtenden Einführstellung (E) in eine Arretierstellung (A) mit Hintergreifen der Flachteile schwenkbar ausgebildet ist.

10. Vorrichtung nach Anspruch 9, dadurch gekennzeichnet, daß der Zentrieransatz (212) als mit wenigstens einer der Durchbrechungen (103) kraftschlüssig zusammenwirkendes Dreharretierungselement für die Bolzen-Mutteranordnung ausgebildet ist.

11. Vorrichtung nach Anspruch 9 und 10, dadurch gekennzeichnet, daß die innere Stirnfläche des die Flachteile hintergreifenden Elementes (211) mit einem in der Arretierungsstellung (A) an eine Stelle (204) der Wandung einer Durchbrechung (103) angreifenden, nockenartigen Dreharretierungsglied (213) versehen ist.

12. Vorrichtung nach einem der Ansprüche 9 bis 11, dadurch gekennzeichnet, daß das die Flachteile hintergreifende Element (211) als Mutter mit bezüglich der Durchbrechungs-Zentralachse (X-X) exzentrischer Gewindeachse (Y-Y) ausgebildet ist und daß diese Gewindeachse die Schwenkachse für den Übergang zwischen der Einführstellung (E) und der Arretierungsstellung (A) bildet.

13. Vorrichtung nach Anspruch 12, dadurch gekennzeichnet, daß zwischen dem als Mutter ausgebildeten, die Flachteile hintergreifenden Element (211) und dem Bolzen (6) ein nachgiebig, insbesondere reibungsschlüssig wirkendes Blattfederelement (210) vorgesehen ist.

## Claims

1. Device for screw fastening of flat parts (1, 2) to one another, having a bolt-nut arrangement (5, 15) which can be inserted from an actuating side into perforations (3, 103) of the flat parts and comprising a bolt element (6, 16) and a nut element (11, 21, 211), with the nut element, after rotating out of a passage position into a locking position, comprising at least one part which grips behind the flat parts and a rotation locking member (12, 22, 213) connected non-rotationally to the part gripping behind the flat parts and sitting against at least one wall (4, 204) of the perforations, characterised in that a head element (8, 18, 208) is provided on the side of the bolt-nut arrangement (5, 15) opposite the rotation locking member (12, 22, 213), which head element (8, 18, 208) is supported on the surface of the adjacent flat part (1), completely covers the perforations (3, 103) and is attached onto the bolt element (6, 16) or is made in one piece with the latter, and that a rotation driving member (10, 210) acting by friction contact of soft-elastic positive contact is provided which, during one rotation of the bolt element (6, 16) is capable of turning with the nut element (11, 21, 211) gripping behind the flat parts (1, 2).

2. Device according to Claim 1, characterised in that the rotation locking member (12, 22) is integrally formed in one piece on the part of the bolt-nut arrangement (5, 15) gripping behind the flat parts (1, 2) and has at least one cam-shaped stop element (12, 22) defined essentially by two surfaces (12a, 22a) at an angle to one another of about 90° and parallel to the bolt axis (X-X).

3. Device according to Claim 1 or 2, characterised in that the head element (8, 18) is provided with a recess (9, 19), arranged on its flat-part side inner surface, for locating an end section of the rotation locking member (12, 22).

4. Device according to Claim 1, 2 or 3, characterised in that the rotation driving member (10) is arranged between a rotation actuating member (6a) of the bolt-nut arrangement (5) and the element (11) gripping behind the flat parts (1, 2).

5. Device according to Claim 4, characterised in that, as a rotation driving member (10), a compression spring, in particular a disc spring (10), is provided which is in frictional operative connection in the axial direction with an element (12) of the bolt-nut arrangement(5).

6. Device according to one of the preceding claims, characterised in that at least one extension (23) which engages in a section (3a) of at least one perforation (3), which section (3a) projects radially relative to the bolt axis (X-X), is provided at a head element (18) arranged on the actuating side of the flat parts.

7. Device according to Claim 6, characterised in that an adequate distance (A) for the movement of the rotation locking member (12, 22) between the entry position and the locking position (22) is provided between the inner side of the extension (23) and the bolt axis (X-X).

8. Device according to Claim 6 or 7, characterised in that, for a non-circular perforation which is provided at least in the rear part (2) of the flat parts, at least one centering and/or rotation locking extension (23) which engages in the radially projecting perforation section (3a) is provided for the head element (18).

9. Device according to one of Claims 1 to 8, characterised in that, if the perforations are at least approximately circular, the contour of the centering extension (212) and of the element (211) gripping behind the flat parts, as seen in the axial direction (X-X) of the perforations (103), is adapted at an undersize to the perforation contour, and that the element (211) gripping behind the flat parts is made so as to be pivotable, relative to the centering extension (212), about an axis (Y-Y), which is eccentric relative to the perforation centre axis (X-X), from an entry positon (E) aligned to the perforations (103) into a locking position (A) where it is engaged behind the flat parts.

10. Device according to Claim 9, characterised in that the centering extension (212) is made as a rotation locking element for the bolt-nut arrangement, which rotation locking element non-positively interacts with at least one of the perforations (103).

11. Device according to Claim 9 and 10, characterised in that the inner end face of the element (211) gripping behind the flat parts is provided with a cam-like rotation locking member (213) which, in the locking position (A), engages at a point (204) of the wall of a perforation (103).

12. Device according to one of Claims 9 to 11, characterised in that the element (211) gripping behind the flat parts is made as a nut having a screw thread axis (Y-Y) which is eccentric relative to the perforation centre axis (X-X), and that this screw, thread axis forms the pivot axis for the transition between the entry position (E) and the locking position (A).

13. Device according to Claim 12, characterised in that a resilient, in particular frictionally acting leaf spring element (210) is provided between the element (211), made as a nut and gripping behind the flat parts, and the bolt (6).

## Revendications

1. Dispositif pour fixer l'un sur l'autre par vissage des éléments plats (1, 2), comportant un dispositif (5, 15) à boulon et écrou pouvant être inséré à partir d'un côté d'actionnement, dans des perçages (3, 103) des éléments plats et comprenant un élément formant boulon (6, 16) et un élément formant écrou (11, 21, 211) qui comporte moins une partie qui, après rotation depuis une position d'insertion dans une position de blocage, s'engage derrière les éléments plats et un organe de blocage en rotation (12, 22, 213) qui est relié à l'élément formant écrou en étant bloqué en rotation et s'applique contre au moins une paroi (4, 204) des perçages, caractérisé par le fait qu'il est prévu sur le côté du dispositif à boulon et écrou (5, 15), situé à l'opposé de l'organe de blocage en rotation (12, 22, 213), un élément de tête (8, 18, 218) prenant appui sur la surface de l'élément plat voisin (1), recouvrant totalement les perçages (3, 103) et emmanché sur l'élément formant boulon (6, 16) ou bien réalisé d'un seul tenant avec ce dernier, et qu'il est prévu un organe d'entraînement en rotation (10, 210) agissant selon une liaison par frottement ou selon une liaison élastique douce par correspondance de formes, et qui lors d'une rotation de l'élément formant boulon (6, 16) est apte à entraîner l'élément formant écrou (11, 21, 211) s'engageant derrière les éléments plats (1, 2).

2. Dispositif selon la revendication 1, caractérisé par le fait que l'organe de blocage en rotation (12, 22) est réalisé par façonnage, d'un seul tenant, sur la partie, qui s'engage derrière les éléments plats (1, 2), du dispositif à boulon et écrou (5, 15) et possède au moins un organe de butée (12, 22) en forme de came, délimité essentiellement par deux surfaces (12a, 22a) faisant entre elles un angle d'environ 90° et parallèles à l'axe X-X du boulon.

3. Dispositif selon la revendication 1 ou 2 caractérisé en ce que l'élément de tête (8, 18) est muni d'un évidement (9, 19) ménagé dans sa surface intérieure situé du côté de l'élément plat et servant à recevoir une partie d'extrémité de l'organe de blocage en rotation (12, 22).

4. Dispositif selon la revendication 1, 2 ou 3 caractérisé par le fait que l'organe d'entraînement en rotation (10) est disposé entre un organe d'entraînement en rotation (6a) du dispositif à boulon et écrou (15) et l'organe (11) s'engageant derrière les éléments plats (1, 2).

5. Dispositif selon la revendication 4, caractérisé en ce qu'il est prévu, comme organe d'entraînement en rotation, un ressort de compression, notamment un ressort Belleville (10) qui coopère, selon une liaison de frottement suivant la direction axiale, avec un élément (12) du dispositif à boulon et écrou (5).

6. Dispositif selon l'une des revendications précédentes, caractérisé en ce qu'il est prévu, sur un élément de tête (18) disposé sur le côté d'actionnement des éléments plats, au moins un organe saillant (23) s'engageant dans une section (3a) s'étendant radialement par rapport à l'axe (X-X) du boulon, d'au moins un perçage (3).

7. Dispositif selon la revendication 6, caractérisé en ce qu'entre la face intérieure de la partie saillante (23) et l'axe (X-X) du boulon il est prévu une distance (A) qui est suffisante pour le déplacement de l'organe de blocage en rotation (12, 22) entre la position d'insertion et la position de blocage (22).

8. Dispositif selon la revendication 6 ou 7, caractérisé en ce que sur au moins un perçage non circulaire (3) prévu dans celui (2) des éléments plats qui est disposé en arrière, il est prévu au moins un organe saillant (23) de centrage et/ou de blocage en rotation s'engageant dans la partie (3a) du perçage, qui est disposée radialement, pour l'élément de tête (18).

9. Dispositif selon l'une revendications 1 à 8, caractérisé en ce que, dans le cas de perçages au moins approximativement circulaires le contour, prévu suivant la direction axiale (X-X) des perçages (103) de l'organe saillant de centrage (212) et de l'organe (211) s'engageant derrière les éléments plats est adapté, avec une dimension inférieure à la cote prescrite, à la circonférence des perçages, et que l'organe (211) s'engageant derrière les éléments plats est réalisé de manière à pouvoir pivoter, par rapport à l'organe saillant de centrage (212), autour d'un axe (Y-Y) excentré par rapport à l'axe central (X-X) du perçage, depuis une position d'insertion (E) alignée avec les perçages (103) dans une position de blocage (A) en s'engageant derrière les éléments plats.

10. Dispositif selon la revendication 9, caractérisé en ce que l'organe saillant de centrage (212) est réalisé sous la forme d'un organe de blocage en rotation coopérant selon une liaison à force avec au moins l'un des perçages (103), pour le dispositif à boulon et écrou.

11. Dispositif selon les revendications 9 et 10, caractérisé par le fait que la surface frontale intérieure de l'organe (211) s'engageant derrière les éléments plats comporte un organe de blocage en rotation en forme de came (213), s'engageant, dans la position de blocage (A), contre la paroi d'un perçage (103) en un emplacement (204).

12. Dispositif selon l'une des revendications 9 à 11, caractérisé en ce que l'organe (211) s'engageant derrière les éléments plats est réalisé sous la forme d'un écrou dont l'axe (Y-Y) du filetage est excentré par rapport à l'axe central (X-X) du perçage, et que cet axe de filetage constitue l'axe de pivotement pour le passage entre la position d'insertion (E) et la position de blocage (A).

13. Dispositif selon la revendication 12, caractérisé en ce qu'il est prévu, entre l'organe (211) réalisé en forme d'écrou et s'engageant à travers les éléments plats, et le boulon (6), un élément de ressort à lame (210) flexible et agissant notamment selon une liaison de frottement.

0 038 081

Fig.1

Fig.2

9

Fig.3

16

19

18

23

22

23

IV                                    IV

21

22                                    17

X

15

18

22a

22

19

23                                    23

19

16

Fig.4

22

Fig. 5

Fig. 6